# EUROPEAN PATENT SPECIFICATION

(11) **EP 0 824 367 B1**
(45) Date of publication and mention of the grant of the patent: **02.06.1999**
(21) Application number: 96914198.5
(22) Date of filing: 10.05.1996
(51) Int. Cl.: B01F 3/08, B01F 11/02

(54) **APPARATUS FOR PRODUCING A FUEL MIXTURE**
VORRICHTUNG ZUR ERZEUGUNG EINES KRAFTSTOFFGEMISCHES
APPAREIL DESTINE A PRODUIRE UN MELANGE DE CARBURANT

(30) Priority: 12.05.1995 DE 19517537
(43) Date of publication of application: 25.02.1998
(73) Proprietor: PPV VERWALTUNGS AG, 8032 Zürich (CH)
(72) Inventor: PÖSCHL, Günter, D-71409 Schwaikheim (DE); SCHWIER, Frank, 98617 Meiningen (DE)
(86) International application number: EP9602014
(87) International publication number: WO9635505

(56) References cited:
- EP-A- 0 333 664
- EP-A- 0 495 506
- DE-C- 4 326 360
- US-A- 3 977 604
- DATABASE WPI Section Ch, Week 9241 Derwent Publications Ltd., London, GB; Class H06, AN 92-338677 XP002010619 & SU,A,1 690 828 (FAR E DALGIPRORYBFLOT DES CONS INST) , 15 November 1991

## Description

The invention relates to an apparatus for producing a fuel mixture according to the preamble of claim 1.

DE-C-43 26 360 shows such a device for producing a fuel mixture comprising a mixing device, an electrolytic decomposition device and an ultrasonic device. These components are contained in a single mixing chamber.

The fuel mixture produced by this known apparatus can be made directly in vehicles and does not require large and heavy energy storage tanks such as those necessary for alternative energy sources like hydrogen or electricity in vehicles. The total energy balance in a vehicle provided with the known apparatus or in a vehicle operated with a fuel produced by such apparatus is thus better than in a vehicle operated with an alternative energy source. In practical use of the apparatus, however, it has been shown that the output and the exhaust values of the inernal combustion engine of a vehical are not optimal when the operational parameters of the vehicle fluctuate. Similar problems arise when the consumer is not an internal combustion engine of a vehicle, but rather an infinitely variable burner.

EP-A-0 495 506 shows a mixing chamber for mixing fuel, water and air with a mixing device, and an ultrasonic device.

SU-A-1 690 828 shows an electrolytic treatment process of water which subsequently is mixed with a fuel.

EP-A-0 333 664 shows an partial electrolytic decomposition process of water which is subsequently sprayed into a fuel/air mixture.

It is the object of the invention to provide an apparatus according to the preamble of claim 1 which is capable of delivering an improved fuel mixture suitable for stationary operation.

This object is achieved with the features of claim 1.

A microprocessor control dependent on a map of characteristic and present in the control arrangement according to the invention enables single components of the apparatus for producing a fuel mixture to be controlled such that optimal output and exhaust values of the consumer can always be attained with the fuel mixture produced. In the course of a combustion process many compounds develop that are absolutely undesirable since they ultimately lead to undesired carbon compounds such as soot, that are detrimental to the combustion efficiency. This soot then holds polycyclic aromatic compounds that are even more difficult to burn than carbon. A further disadvantage is that these polycyclic aromatic compounds are highly carcinogenic. These undesired compounds that could result in soot are prevented by the control arrangement according to the invention in that the fuel/water mixture undergoes catalytic hydrolysis under the influence of ultrasonic cavitation in a decomposition device for breaking down the water, whereby it is guaranteed that polycyclic aromatic compounds can not develop at all. Through the ultrasonic cavitation, temperatures of over 2000° C occur, with the result that carbon from hydrocarbon compounds in connection with water is catalytically converted to CO and H₂ (cf. Fischer-Tropsch method), that are very rich in energy and easily combustible. This can automatically increase the output of the consumer, since it can better exploit the fuel mixture. Improved exhaust values in turn result from this. Since the characteristic map as a function of which the microprocessor control works covers the entire region including idling and full power of the consumer, optimal output and exhaust values also result in the entire region between idling and full power. The consumer can be an internal combustion engine or an infinitely variable burner.

Advantageous embodiments of the invention constitute the subject matters of the subclaims.

In the embodiment according to claim 2 the mixing capacity in the mixing chambers can be adapted to the different requirements of fuel mixture. If the fuel mixture is composed of much water and little fuel, a different rotational speed is needed than in such cases in which the fuel mixture is composed of much fuel and little water. In the first instance oil droplets are embedded in water; hence there is a so-called water-oil emulsion. In the second instance water droplets are embedded in oil; hence there is an oil-water emulsion.

The embodiment of the invention according to claim 3 refers to a particularly advantageous construction of the decomposition device. The fuel mixture, supplied as an emulsion to the decomposition device from the first mixing chamber, must be capable of being broken down in the decomposition device. The microprocessor control adapts the pulse voltage applied to the decomposition device to the consistency of the fuel mixture. If much oil and little water are present in the fuel mixture, that is the mixture has a high consistency, a voltage in the shape of long pulses with high amplitude is applied to the decomposition device. The reason for this is that the fuel generally has an insulating effect, but the voltage should reach the water that is ultimately to be broken down.

In the embodiment of the invention according to claim 4, the ultrasonic oscillation amplitude of the ultrasonic power converter is adapted to the consistency of the fuel mixture exposed to the ultrasonic oscillations. A fuel mixture with a higher consistency requires ultrasonic oscillations of a higher amplitude.

In the embodiment of the invention according to claim 5 the output of the two metering pumps can be controlled as a function of the characteristic map, so that the consistency of the fuel mixture is likewise adapted to the characteristic map.

A multipath valve according to claim 6 makes possible a particularly practical connection of the control arrangement to a consumer.

In the embodiment of the invention according to claim 7 it is possible to supply the consumer with fuel mixture in a simple, process-dependent manner by a process-dependent control of the multipath valve. In this case, for example, the consumer can be a burner.

If the consumer is a diesel engine, the multipath valve in the embodiment of the invention according to claim 8 supplies the feed pump, i.e. the injection pump of the diesel engine, that conveys to the hydraulically driven pump. As long as the multipath valve delivers fuel mixture, the fuel, that is the diesel fuel delivered by the feed pump, merely serves to drive the hydraulically driven pump that conveys the fuel mixture delivered by the multipath valve to the engine.

If the delivery of the fuel mixture by the multipath valve is interrupted, the feed pump in the embodiment of the invention according to claim 9 conveys diesel fuel instead of the fuel mixture to the injection nozzles of the motor.

If the consumer is a burner, in the embodiment of the invention according to claim 10 the hydraulically driven pump is connected to the atomizer nozzle of the burner.

Embodiments of the invention are described in detail below with reference to the drawings.
- Fig. 1: shows an overall schematic drawing of an apparatus according to the invention for producing a fuel mixture, and
- Fig. 2: schematically shows the construction of a device used in the apparatus, for breaking down water contained in the fuel mixture.

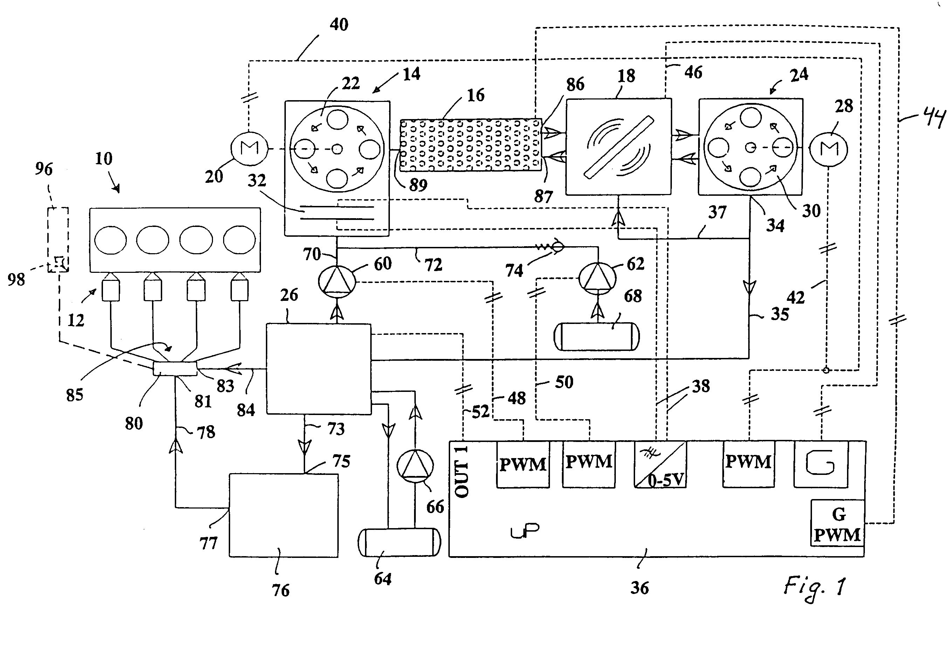

Fig. 1 shows an embodiment an apparatus for producing a fuel mixture in which the consumer to be supplied with the fuel mixture is a four-cylinder diesel engine. Therefore, when fuel or combustibles are mentioned below, diesel fuel is meant. The consumer as a whole is marked with reference number 10 in Fig. 1 and is schematically shown as a motor block with four associated injection nozzles marked as a whole with reference number 12.

The apparatus for producing a fuel mixture composed of at least one combustible and additionally of a selectable proportion of water includes - as is known per se (DE-C-43 26 360) - a first mixing chamber 14 for intimately mixing fuel and water; a decomposition device 16 connected to the first mixing chamber 14, for breaking down the water contained in the fuel mixture delivered from the first mixing chamber; and an ultrasonic power converter 18 connected to the decomposition device 16, for the ultrasonic treatment of the fuel mixture delivered from the decomposition device. The first mixing chamber 14 contains a mixing tool 22 rotatable by a motor 20. This mixing tool can be a discus-shaped cavitation element with a design that is likewise known per se (DE-C-43 26 360 and DE-C-42 23 434). A catalytic electrolysis in which the water is partly broken down electrolytically takes place in the decomposition device 16.

The apparatus for producing a fuel mixture described up to this point is better suited for stationary operation, i.e. for operation in which the output of a consumer and thus the load on the apparatus does not change within broad limits. Otherwise, the consumer would have exhaust values that are not optimal. The apparatus is therefore supplemented with the control arrangement described below, so that optimal exhaust values of the consumer are attained. Instead of a diesel engine, this consumer can also be an infinitely variable burner 96, that is known per se, with an atomizer nozzle 98 (DE-A-42 15 763), as is suggested in Fig. 1.

Accordingly, the series connection of first mixing chamber 14, decomposition device 16 and ultrasonic power converter 18 is followed by a second mixing chamber 24 as a further component of the apparatus, for maintaining an extremely fine fuel mixture nucleation state produced by the ultrasonic power converter 18. A multipath valve 26 is connected to the outlet of the second mixing chamber 24, the further connections of which valve are described in greater detail below. The second mixing chamber 24, like the first mixing chamber 14, contains a mixing tool 30 rotatable by a motor 28. Associated with the first mixing chamber 14 is a measuring device 32 in the form of a capacitive concentration-measuring system for measuring the quantities of fuel and water fed to the first mixing chamber 14. The components 14, 16, 18 of the apparatus for producing a fuel mixture and its additional component 24 are disposed in a common housing in the embodiment described here. However they can also be placed in separate housings and interconnected in the manner shown in Fig. 1. The respective connections in both directions between the components 16 and 18, and 18 and 24 should suggest that the ultrasonic power converter 18 also acts on the fuel mixture located in the decomposition device 16 and that the second mixing chamber 24 receives fuel mixture from the ultrasonic power converter 18 and feeds it back thereto until the fuel mixture to be delivered to the multipath valve 26 via conduit 35 and outlet 34 of the second mixing chamber 24 has the proper consistency.

A microprocessor control 36 is connected at its input end via a line 38 to the measuring device 32. At its output end the microprocessor control 36 is connected via lines 40, 42, 44, 46 to the motor 20, the motor 28, the decomposition device 16 and the ultrasonic power converter 18, respectively. In addition, the microprocessor control 36 is connected at its output end via lines 48 and 50 to a metering device for fuel and for water.

The metering device comprises a metering pump 60 for fuel and a metering pump 62 for water. The metering pump 60 conveys fuel via the multipath valve 26, that is connected as shown to a fuel supply means in the form of a fuel tank 64 and a fuel pump 66. The metering pump 62 conveys water from a water tank 68. The metering pumps 60 and 62 are connected to the inlet of the first mixing chamber 14 via conduits 70 and 72 respectively. A check valve 74 in conduit 72 prevents fuel from entering the metering pump 62 and the water tank 68.

Finally, the microprocessor control 36 is connected at its output end via a line 52 to the multipath valve 26. The multipath valve 26 can be actuated via the line 52 in such a way that the engine 10 is not started with fuel mixture, but rather with pure diesel fuel. This is described in further detail below.

The multipath valve 26 as given above is connected to a fuel supply means in the form of the fuel tank 64 and the fuel pump 66, and in turn supplies an inlet 75 of a feed pump 76 with fuel via an outlet conduit 73. The outlet 77 of the feed pump 76 is connected via a feed conduit 78 to the consumer 10, or more precisely with the four injection nozzles 12 of the diesel engine, albeit not directly, but rather via a pump 80 located in the feed conduit 78 and hydraulically driven by the fuel. The hydraulically driven pump 80 has two inlets 81, 83 connected respectively to the feed conduit 78 and via an outlet conduit 84 to the multipath valve 26; it also has an outlet 85 connected to the injection nozzles 12. The hydraulically driven pump 80 is constructed in such a manner that it delivers fuel mixture supplied by the multipath valve 26 via the conduit 84 to the injection nozzles 12 (controlled in the proper sequence, which need not be described in detail here), whereas otherwise the hydraulically driven pump 80 delivers the fuel supplied to the feed pump 76 to the injection nozzles 12 via the conduit 78. In the event that the multipath valve 26 accepts no fuel mixture from the outlet 34 of the second mixing chamber 24, the fuel mixture is fed back via a shunt 37 to the ultrasonic power converter 18 for further improvement of the extremely fine nucleation state of the fuel mixture, until fuel mixture is once again to be fed to the consumer 10 via the multipath valve 26.

The individual components are each controlled by width-modulated pulses via the output end of the microprocessor control 36.

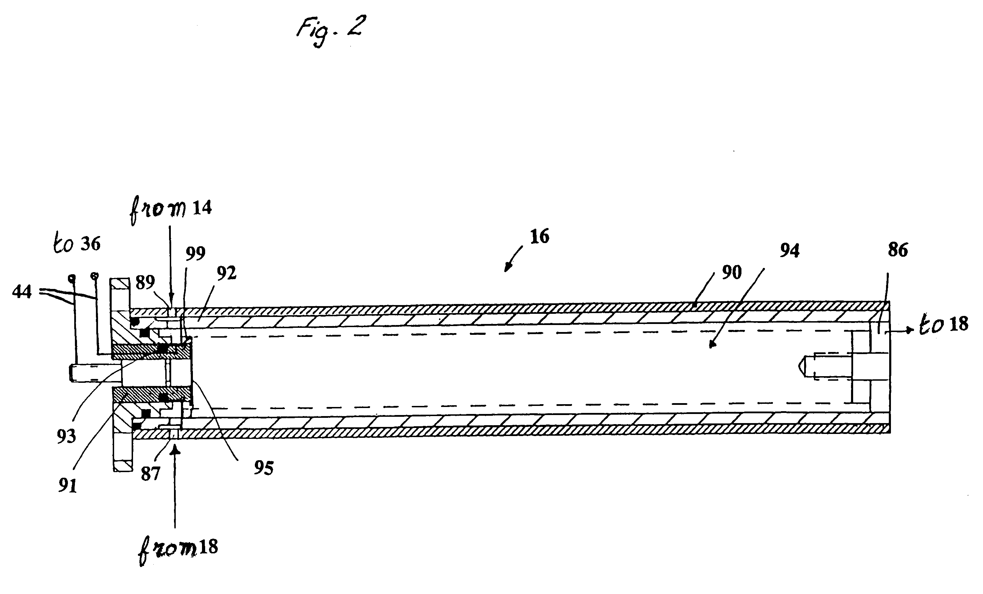

Fig. 2 shows as a detail an example of the inner structure of the decomposition device 16. This comprises primarily an outer cylinder 90; an insulation pipe 92, for instance made of Teflon; an anode in the form of a multi-threaded spindle 94 electrically insulated from the cylinder 90 by the insulation pipe 92; and an electrode in the form of a platinum wire 99 as a cathode. This platinum wire 99 is laid into the threads, that are insulated at the bottom, of the threaded spindle 94; it is wound up and down in several threads of the threaded spindle; and finally it is connected to a contact ring 95 shown in Fig. 2 at the left end of the thread. The contact ring 95 in turn is electroconductively connected to a central pin of the threaded spindle 94. The threaded spindle 94 is made of nickel. The anode and the cathode of the decomposition device 16 are supplied with pulses of high direct voltage from the microprocessor control 36 via two connecting lines 44. The one connecting line leads to a socket 91 that is a plastic part coated with metal on the outside in the region to the right of an O-ring 93. The other connecting line leads through the socket 91 and is electrically connected to its metallic coating, which is in turn electroconductively connected to one end of the platinum wire 99, the other end of the wire being electroconductively connected to the contact ring 95. An emulsion of diesel fuel and water (described in greater detail below) reaches the interior of the cylinder 90 from the first mixing chamber 14 via a bore 89, flows through the threads of the threaded spindle 94 to the right in Fig. 2 and exits at the right-hand end of the decomposition device 16 via the bore 86 of the insulation pipe 92, to flow into the ultrasonic power converter 18. In the threads the emulsion makes contact with the anode and cathode, to be broken down by catalytic hydrolysis (as will also be described in greater detail below).

The ultrasonic oscillation of the ultrasonic power converter 18 is amplitude controlled by the microprocessor control 36 with the aid of width-modulated pulses.

The mode of operation of the control arrangement described above is described in the following for the case in which the consumer 10 is a four-cylinder diesel engine with four injection nozzles 12 as shown in the drawing.

First of all, a starting and stopping procedure for the engine 10 is described. When the engine 10 is started, the multipath valve 26 switches such that the injection nozzles 12 are supplied with pure diesel fuel via the feed pump 76. Shortly thereafter mixture is prepared and reaches these injection nozzles 12 via the hydraulically driven pump 80 when the multipath valve 26 switches back. When the engine 10 is then turned off, this multipath valve 26 switches into the former position, and for the final revolutions of the engine 10 the injection nozzles 12 are once again supplied with pure diesel fuel. The reason for this is that fuel mixture produced in the apparatus has aggressive properties that would cause corrosion in older engines if it were present in these spaces or at the valves over a longer period of time. The fuel mixture namely contains purest water, which turns the fuel mixture into a weak acid or a strong alkaline, both of which would corrode the material of the engine 10.

The starting procedure is now complete. The motor is running and alters its rotational speed; i.e. the automobile is starting off. Depending on the fuel quantity needed for the load requirement at hand, which can change very rapidly, suitable proportions of fuel and water are now metered into the first mixing chamber 14. The suitable quantity is defined by the measuring device 32. If too much water were present, the water quantity would be reduced; if too much fuel were present, the fuel quantity would be reduced. An emulsion is mechanically produced in the first mixing chamber 14 by the rotating mixing tool 22 driven by an electric motor. The rotational speed of the mixing tool 22 is altered corresponding to the consistency, i.e. corresponding to the ratio of water to diesel fuel, so that an emulsion develops that can be broken down between the cathode and the anode during the subsequent catalytic hydrolysis in the decomposition device 16. That is, the emulsion can be broken down in such a manner that a portion of the water is split into hydrogen and oxygen which, present in gaseous form, are conveyed by the flow into the ultrasonic chamber of the ultrasonic power converter 18. Here it is important that the decomposition device 16 directly communicate with the ultrasonic power converter 18 (via the bore 86 and a bore 87), i.e. that the entire unit of decomposition device 16 and ultrasonic power converter 18 oscillate at the frequency initiated by the ultrasound and developing from the amplitude transformation. This coupling naturally gives rise to a frequency gradient, since a metallic rod (threaded spindle 94 in Fig. 2) embedded in a liquid reduces the frequency and increases the amplitudes, depending on its length. Through the action on the liquid by ultrasound, zones occur that are highly energetic in their microstructure, i.e. regions with very high temperatures due to the implosion of cavitation bubbles arise. Carbon chains are thereby altered such that hardly combustible, long-chain hydrocarbons are converted to shorter-chain ones. Due to the high temperatures and with the presence of water, CO and H2 are directly formed from the carbon therein released. Since the gas quantity increases due to this process, mixture created in the region of the ultrasonic power converter 18 must be further finely nucleated. At this point in time, there can be no further mention of an emulsion; it is already a dispersion, i.e. a gas dispersed in a liquid. The gas is partly dissolved and partly present in extremely fine bubbles. Since due to the sonochemical reaction larger gas bubbles are also still in the mixture, the second mixing chamber 24 is necessary. It contains the rotating mixing tool 30, the rotational speed of which is altered as a function of the consistency of the fuel mixture, i.e. of the fuel dispersion; this means a very high rotational speed when the proportion of gas is very large and a low rotational speed when the proportion of oil is large. This dispersion is then conveyed via the multipath valve 26 directly into the hydraulically driven pump 80, which is seated directly before each injection nozzle 12 and supplies the engine 10 with the fuel mixture.

The microprocessor control 36 is freely programmable and adaptable to any map of characteristic. Every diesel engine 10 has different characteristics and a different characteristic map resulting therefrom. The operational points in the characteristic map have been empirically detected on a testing station at which the output and the exhaust have been measured, Depending on the concentration, i.e. the quantity of water and of fuel fed to the first mixing chamber 14, and on the data resulting therefrom, the microprocessor control 36 is set so that at every operational point the suitable fuel mixture is always available.

Looking now at the operational conditions during a non-stationary operation, it can happen that full power is first exerted, i.e. that the engine 10 can take a large proportion of water. Now if in a diesel engine with no throttle valve the gas pedal is released so that the idling range is reached, then the engine would be brought to a stop with this high water concentration, i.e. due to a resultant ignition delay, it would shift from the combustion process to the stopping process. The rotational speed of the motor would be thereby greatly reduced. Therefore, the multipath valve 26 must then switch and feed pure diesel fuel to the engine. The microprocessor control 36 effects this via the line 52. This applies only in the lowest load range. Due to the sophisticated control by the control arrangement described here, very large proportions of water can be used.

### Designations and drive:

| | | |
|---|---|---|
| 60 | diesel metering pump | 24 V 3 W PWM* 0-100% 2% precision |
| 62 | water metering pump | 24 V 3 W PWM 0-100% 2% precision |
| 20, 28 | cavitation motors | 24 V 2*15 W PWM 0-100% 10% precision |
| 16 | decomposition device (catalytic hydrolysis) | 110 V 2A PWM 500 Hz to 2.5 kHz 0-100% |

| | | |
|---|---|---|
| * pulse width modulation | | |

The change in rotational speed, i.e. the change in conveying capacity of the diesel pump 60, ranges from 0 to 100% with 2% precision, hence with an accuracy of ± 2%. This wide tolerance does not negatively affect the fuel mixture. In the electric motors 20, 28 for driving the mixing tools 22, 30 in the first and second mixing chambers 14 and 24, respectively, 10% tolerances are permissible, since it does not matter whether the mixing tool motor rotates at 8600 revolutions or 10% more. In the catalytic hydrolysis in the decomposition device 16 the given frequency of 500 Hz to 2.5 kHz, i.e. the frequency of the voltage pulses given off by the microprocessor control 36 to the decomposition device 16, must be very precise, since the damping of the amplitude is influenced by the density to the third power. Thus a scattering of 1% would already be too great.

## Claims

1. An apparatus for producing a fuel mixture composed of at least a fuel and additionally of a selectable proportion of water, the apparatus being provided with the following components
- at least one first mixing chamber (14) for intimately mixing fuel and water,
- a device (16) for decomposing the water, and
- an ultrasonic power converter (18) for the ultrasonic treatment of the fuel mixture,
characterized by
- the first mixing chamber (14), the decomposition device (16) and the ultrasonic power converter (18) being arranged in such a way that the decomposition device (16) receives the fuel mixture from the first mixing chamber (14) and delivers the fuel mixture to the ultrasonic power converter (18),
- a second mixing chamber (24) associated with the ultrasonic power converter (18), for maintaining an extremely fine fuel mixture nucleation state created by the ultrasonic power converter (18),
- a measuring device (32) for measuring the quantities of fuel and/or water fed to the first mixing chamber (14), and
- a microprocessor control (36) dependent on a characteristic map, connected at its input end with the measuring device (32) and at its output end with the first mixing chamber (14), the decomposing device (16), the ultrasonic power converter (18), the second mixing chamber (24) and with a metering device (60, 62) for fuel and water, the metering device (60, 62) being connected to the first mixing chamber (14).

2. The apparatus according to claim 1, characterized in that the mixing chambers (14, 24) respectively contain a rotatable mixing tool (22, 30) provided with a motor (20, 28), the rotational speed of the motors (20, 28) being controllable by the microprocessor control (36).

3. The apparatus according to claim 1 or 2, characterized in that the decomposition device (16) has a cylinder (90) and a threaded spindle (94) disposed in and electrically insulated from the cylinder (90), with a wire-shaped electrode (99) being laid in the threads of and being insulated from the threaded spindle, the wire-shaped electrode (99) and the threaded spindle (94) consisting of metals of different electrochemical series and forming a cathode and an anode, respectively, supplied with pulses of high direct voltage from the microprocessor control (36).

4. The apparatus according to any of claims 1 to 3, characterized in that the ultrasonic oscillation of the ultrasonic power converter (18) is amplitude-controlled by the microprocessor control (36).

5. The apparatus according to any of claims 1 to 4, characterized in that the metering device (60, 62) has a metering pump (60) for fuel and a metering pump (62) for water, their capacity being controllable by the microprocessor control (36).

6. The apparatus according to any of claims 1 to 5, characterized by a multipath valve (26) associated with the second mixing chamber (24), for releasing the fuel mixture to a consumer (10).

7. The apparatus according to claim 6, characterized in that the multipath valve (26) is connected to a fuel supply means (64, 66) and supplies in turn the inlet (75) of a feed pump (76) with fuel, the outlet (77) thereof being connected to the consumer (10) via a feed conduit (78).

8. The apparatus according to claim 7, characterized in that a pump (80) hydraulically driven by fuel is disposed in the feed conduit (78) and has two inlets (81, 83) connected to the feed pump (76) and the multipath valve (26), respectively, and further has an outlet (85) connected to the consumer (10), with the hydraulically driven pump (80) being constructed such that upon delivery of the fuel mixture by the multipath valve (26), the pump (80) conveys this fuel mixture to the consumer (10) and otherwise conveys to the consumer (10) the fuel fed to it by the feed pump (76).

9. The apparatus according to claim 8, characterized in that the consumer (10) is a diesel engine with injection nozzles (12) to which the outlet (85) of the hydraulically driven pump (80) is connected.

10. The apparatus according to claim 8, characterized in that the consumer (10) is a burner (96) with an atomizer nozzle (98) to which the outlet (85) of the hydraulically driven pump (80) is connected.

## Patentansprüche

1. Vorrichtung zum Herstellen eines Brennstoffgemischs, das wenigstens aus einem Brennstoff und zusätzlich aus in seinem Mengenanteil wählbaren Wasser besteht, wobei die Vorrichtung die folgenden Komponenten aufweist:
- wenigstens eine erste Mischkammer (14) zum innigen Vermischen von Brennstoff und Wasser,
- eine Einrichtung (16) zum Zerlegen des Wassers, und
- einen Ultraschalleistungswandler (18) zur Ultraschallbehandlung des Brennstoffgemischs,
gekennzeichnet durch
- eine Anordnung der ersten Mischkammer (14), der Einrichtung zum Zerlegen (16) und des Ultraschalleistungswandlers (18) derart, daß die Einrichtung zum Zerlegen (16) das Brennnstoffgemisch von der ersten Mischkammer (14) empfängt und das Brennnstoffgemisch an den Ultraschalleistungswandler (18) abgibt,
- eine zweite Mischkammer (24), die dem Ultraschalleistungswandler (18) zugeordnet ist, um einen durch den Ultraschalleistungswandler (18) erzeugten Feinstnukleierungszustand aufrechtzuerhalten,
- eine Meßeinrichtung (32) zum Messen der der ersten Mischkammer (14) zugeführten Mengen von Brennstoff und/oder Wasser, und
- eine kennfeldabhängige Mikroprozessorsteuerung (36), die eingangsseitig mit der Meßeinrichtung (32) und ausgangsseitig mit der ersten Mischkammer (14), der Einrichtung zum Zerlegen (16), dem Ultraschalleistungswandler (18), der zweiten Mischkammer (24) und mit einer Dosiereinrichtung (60, 62) für Brennstoff und Wasser verbunden ist, wobei die Dosiereinrichtung (60, 62) mit der ersten Mischkammer (14) verbunden ist.

2. Vorrichtung nach Anspruch 1, dadurch gekennzeichnet, daß die Mischkammern (14, 24) jeweils ein mit einem Motor (20, 28) versehenes, drehbares Mischwerkzeug (22, 30) enthalten, wobei die Drehzahl der Motoren (20, 28) durch die Mikroprozessorsteuerung (36) steuerbar ist.

3. Vorrichtung nach Anspruch 1 oder 2, dadurch gekennzeichnet, daß die Einrichtung zum Zerlegen (16) einen Zylinder (90) und eine in diesem angeordnete und elektrisch von dem Zylinder (90) isolierte Gewindespindel (94) aufweist, in deren Gewindegänge eine drahtförmige Elektrode (99) eingelegt und von der Gewindespindel isoliert ist, wobei die drahtförmige Elektrode (99) und die Gewindespindel (94) aus Metallen unterschiedlicher chemischer Spannungsreihen bestehen und eine Kathode bzw. Anode bilden, die von der Mikroprozessorsteuerung (36) mit Impulsen hoher Gleichspannung versorgt werden.

4. Vorrichtung nach einem der Ansprüche 1 bis 3, dadurch gekennzeichnet, daß die Ultraschallschwingung des Ultraschalleistungswandlers (18) durch die Mikroprozessorsteuerung (36) amplitudengesteuert ist.

5. Vorrichtung nach einem der Ansprüche 1 bis 4, dadurch gekennzeichnet, daß die Dosiereinrichtung (60, 62) eine Dosierpumpe (60) für Brennstoff und eine Dosierpumpe (62) für Wasser aufweist, deren Förderung durch die Mikroprozessorsteuerung (36) steuerbar ist.

6. Vorrichtung nach einem der Ansprüche 1 bis 5, gekennzeichnet durch ein der zweiten Mischkammer (24) zugeordnetes Mehrwegeventil (26) zum Abgeben des Brennstoffgemisches an einen Verbraucher (10).

7. Vorrichtung nach Anspruch 6, dadurch gekennzeichnet, daß das Mehrwegeventil (26) mit einer Brennstoffversorgung (64, 66) verbunden ist und seinerseits den Eingang (75) einer Förderpumpe (76) mit Brennstoff versorgt, deren Ausgang (77) über eine Förderleitung (78) mit dem Verbraucher (10) verbunden ist.

8. Vorrichtung nach Anspruch 7, dadurch gekennzeichnet, daß in der Förderleitung (78) eine durch Brennstoff hydraulisch betätigte Pumpe (80) angeordnet ist, die zwei Eingänge (81, 83) aufweist, welche mit der Förderpumpe (76) bzw. dem Mehrwegeventil (26) verbunden sind, und die ferner einen Ausgang (85) aufweist, der mit dem Verbraucher (10) verbunden ist, wobei die hydraulisch betätigte Pumpe (80) derart ausgebildet ist, daß sie bei Abgabe des Brennstoffgemisches durch das Mehrwegeventil (26) dieses Brennstoffgemisch an den Verbraucher (10) abgibt und andernfalls den ihr durch die Förderpumpe (76) zugeführten Brennstoff an den Verbraucher (10) abgibt.

9. Vorrichtung nach Anspruch 8, dadurch gekennzeichnet, daß der Verbraucher (10) ein Dieselmotor mit Einspritzdüsen (12) ist, an die der Ausgang (85) der hydraulisch betätigten Pumpe (80) angeschlossen ist.

10. Vorrichtung nach Anspruch 8, dadurch gekennzeichnet, daß der Verbraucher (10) ein Brenner (96) mit einer Zerstäubungsdüse (98) ist, an die der Ausgang (85) der hydraulisch betätigten Pumpe (80) angeschlossen ist.

## Revendications

1. Appareil destiné à produire un mélange de carburant constitué d'au moins un carburant et, de plus, d'une proportion d'eau pouvant être sélectionnée, l'appareil étant pourvu des composants suivants :
- au moins une première chambre de mélange **(14)** destinée à mélanger intimement le carburant et l'eau,
- un dispositif **(16)** destiné à décomposer l'eau, et
- un convertisseur de puissance ultrasonore **(18)** destiné au traitement ultrasonore du mélange de carburant, caractérisé en ce que,
- la première chambre de mélange **(14)**, le dispositif de décomposition **(16)** et le convertisseur de puissance ultrasonore **(18)** sont agencés de façon que le dispositif de décomposition **(16)** reçoive le mélange de carburant depuis la première chambre de mélange **(14)** et délivre le mélange de carburant au convertisseur de puissance ultrasonore **(18)**,
- une deuxième chambre de mélange **(24)** associée au convertisseur de puissance ultrasonore **(18)**, destinée à maintenir un état de nucléation extrêmement fin du mélange de carburant créé par le convertisseur de puissance ultrasonore **(18)**,
- un dispositif de mesure **(32)** destiné à mesurer les quantités de carburant et/ou d'eau délivrées à la première chambre de mélange **(14)**, et
- une commande à microprocesseur **(36)** dépendant d'une carte caractéristique, connectée à son extrémité d'entrée au dispositif de mesure **(32)** et à son extrémité de sortie à la première chambre de mélange **(14)**, au dispositif de décomposition **(16)**, au convertisseur de puissance ultrasonore **(18)**, à la deuxième chambre de mélange **(24)** et à un dispositif de dosage **(60,62)** pour le carburant et l'eau, le dispositif de dosage **(60,62)** étant raccordé à la première chambre de mélange **(14)**.

2. Appareil selon la revendication 1, caractérisé en ce que les chambres de mélange **(14,24)** contiennent respectivement un outil de mélange rotatif **(22,30)** pourvu d'un moteur **(20,28)**, la vitesse de rotation des moteurs **(20,28)** pouvant être commandée par la commande à microprocesseur **(36)**.

3. Appareil selon la revendication 1 ou 2, caractérisé en ce que le dispositif de décomposition **(16)** comporte un cylindre **(90)** et un axe fileté **(94)** disposé dans et isolé électriquement du cylindre **(90)**, avec une électrode en forme de fil **(99)** déposée dans les filets et isolée de l'axe fileté ; l'électrode en forme de fil **(99)** et l'axe fileté **(94)** étant constitués de métaux de séries électrochimiques différentes et constituant respectivement une cathode et une anode, recevant des impulsions de haute tension en courant continu de la commande à microprocesseur **(36)**.

4. Appareil selon l'une quelconque des revendications 1 à 3, caractérisé en ce que l'oscillation ultrasonore du convertisseur de puissance ultrasonor**e (18)** est commandée en amplitude par la commande à microprocesseur **(36)**.

5. Appareil selon l'une quelconque des revendications 1 à 4, caractérisé en ce que le dispositif de dosag**e (60,62)** comporte une pompe de dosage **(60)** pour le carburant et une pompe de dosage **(62)** pour l'eau, leur capacité pouvant être commandée par la commande à microprocesseur **(36)**.

6. Appareil selon l'une quelconque des revendications 1 à 5, caractérisé par une valve multivoies **(26)** associée à la deuxième chambre de mélange **(24)**, destinée à libérer le mélange de carburant vers un dispositif de consommation **(10)**.

7. Appareil selon la revendication 6, caractérisé en ce que la valve multivoies **(26)** est raccordée à des moyens de fourniture de carburant **(64,66)** et délivre à son tour du carburant à l'entrée **(75)** d'une pompe d'alimentation **(76)**, sa sortie **(77)** étant raccordée au dispositif de consommation **(10)** par l'intermédiaire d'une conduite d'alimentation **(78)**.

8. Appareil selon la revendication 7, caractérisé en ce qu'une pompe **(80)** entraînée de manière hydraulique par du carburant est disposée dans le conduit d'alimentation **(78)** et comporte deux entrées **(81,83)** raccordées respectivement à la pompe d'alimentation **(76)** et à la valve multivoies **(26)** et comporte de plus une sortie **(85)** raccordée au dispositif de consommation **(10)**, la pompe entraînée de manière hydraulique **(80)** étant construite de façon que lors de la fourniture du mélange de carburant par la valve multivoie**s (26)**, la pompe **(80)** achemine ce mélange de carburant au dispositif de consommation **(10)** et, dans le cas contraire, achemine au dispositif de consommation **(10)** le carburant qui lui est délivré par la pompe d'alimentation **(76)**.

9. Appareil selon la revendication 8, caractérisé en ce que le dispositif de consommation **(10)** est un moteur diesel avec des buses d'injection **(12)** auxquelles la sortie **(85)** de la pompe entraînée de manière hydraulique **(80)** est raccordée.

10. Appareil selon la revendication 8, caractérisé en ce que le dispositif de consommation **(10)** est un brûleur **(96)** avec une buse de pulvérisation **(98)** à laquelle la sortie **(85)** de la pompe entraînée de manière hydraulique **(80)** est raccordée.
